(19) **Europäisches Patentamt**
**European Patent Office**
**Office européen des brevets**

(11) **EP 4 714 691 A1**

(12) **EUROPEAN PATENT APPLICATION**

(43) Date of publication:
**25.03.2026 Bulletin 2026/13**

(51) International Patent Classification (IPC):
**B60G 17/0185** (2006.01)   **B60G 11/04** (2006.01)
**B60G 9/02** (2006.01)   **G01M 17/04** (2006.01)
**B60G 17/0195** (2006.01)   **B60W 50/04** (2006.01)

(21) Application number: **24202369.5**

(22) Date of filing: **24.09.2024**

(52) Cooperative Patent Classification (CPC):
**B60G 17/0185; B60G 9/02; B60G 11/04;**
**B60G 17/0195; B60W 50/04; G01M 17/04;**
B60G 2200/322; B60G 2202/112; B60G 2300/026;
B60G 2400/0521; B60G 2400/0522;
B60G 2400/252; B60G 2600/08; B60G 2800/70;
B60G 2800/80

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventor: **NALAWADE, Dinkar**
**560043 BANGALORE (IN)**

(74) Representative: **Kransell & Wennborg KB**
**P.O. Box 2096**
**403 12 Göteborg (SE)**

(54) **AUTOMATED LEAF SPRING FAILURE-DETECTION IN HEAVY-DUTY VEHICLES**

(57)     A computer system (400) is provided, including processing circuitry (410) configured to: receive angular velocity data indicative of roll and pitch angular velocities $(\dot{\theta}, \dot{\omega})$ of a leaf spring-suspended bogie of a heavy-duty vehicle; receive deflection data indicative of deflection (d) of leaf springs of the bogie, and detect a failure of at least one leaf spring used to suspend the bogie based on the received angular velocity data and deflection data. In some examples, deflection is indicative of leaf spring failure only if angular velocity data indicates that the bogie is stable and not moving due to e.g. uneven road conditions or undulating road profiles. A corresponding vehicle, computer-implemented method, computer program product and computer-readable storage medium are also provided.

*Fig. 3*

EP 4 714 691 A1

## Description

## TECHNICAL FIELD

The disclosure relates generally to heavy-duty vehicles. In particular aspects, the disclosure relates to heavy-duty vehicles equipped with leaf spring suspension, and to automated detection of failure of one or more springs. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Many heavy-duty wheeled vehicles, such as trucks or buses, use leaf springs for their suspension. In addition to providing damping, the springs also serve to connect the wheel axles to the chassis, and a failure of one or more leaf springs may thus lead to for example an axle being disconnected from the chassis and to loss of vehicle control, which may in turn result in personal injury or worse. Consequently, leaf springs are, when used for suspension, often considered as safety-critical parts, and it is imperative that their functioning can be guaranteed throughout the lifetime of the vehicle.

A common issue includes that it is not always easy for the driver to manually detect that a leaf spring has become damaged. For example, the vehicle may be driven in environments filled with dust and noise, and/or on roads or other surfaces that are bumpy and where it is hard to decide whether a sensed anomaly in vehicle behavior is due to the road or the vehicle itself. In addition, tight working schedules and/or back-to-back shifts may offer little or no time for routine checks of the functionality of the vehicle. Even if the vehicle is capable of continued operation with a failed leaf spring, the failure of one spring may cause additional stress on the other leaf springs in the suspension, and cause accelerated wear and eventual failure of these other leaf springs too, and the required down/service time needed to repair multiple springs may add to the operational costs of the vehicle.

Based on the above, there is therefore a need for an improved way of detecting leaf spring failure in heavy-duty vehicles, both to prevent immediate danger to both the driver and the environment, but also to reduce the risk of further damage to one or more other leaf springs of the suspension.

## SUMMARY

According to a first aspect of the disclosure, there is provided a computer system including processing circuitry. The processing circuitry is configured to receive angular velocity data indicative of roll and pitch angular velocities of a leaf spring-suspended bogie of a heavy-duty vehicle (e.g. angular velocities of the bogie around a corresponding longitudinal and horizontally transverse axis of the bogie, respectively). The processing circuitry is further configured to receive deflection data indicative of deflection of leaf springs of the bogie (such as e.g. data indicative of how much each spring is deflected from its unladen state). The processing circuitry is further configured to detect a failure of at least one leaf spring used to suspend the bogie based on the received angular velocity data and deflection data. The first aspect of the disclosure may seek to solve the problem of automated leaf spring failure detection. A technical benefit may include that by using the angular velocity data and deflection data, the processing circuitry may detect that e.g. a leaf spring has failed in an automated way, and take action accordingly to reduce the potential damages caused by such a situation. In some examples, the angular velocity data is directly or indirectly received from one or more angular velocity sensors configured to measure such angular velocities of the bogie, and/or the deflection data is received from one or more deflection sensors configured to measure such deflection of the leaf springs. As envisaged herein, such angular velocity and/or deflection sensors may be mounted at various points on the bogie.

Optionally, in some examples, including in at least one preferred example, the processing circuitry may be configured to detect the failure of the at least one leaf spring by determining that both the roll and pitch angular velocities are below one or more angular velocity threshold values, and by determining that the deflection of at least one leaf spring is larger than a deflection threshold. A technical benefit may include that the detection can be made less sensitive to disturbances and/or variations in deflection that are not caused by a failed leaf spring but e.g. by the vehicle travelling on a bumpy/uneven road, or similar. By requiring there to be little (i.e. below the one or more angular velocity thresholds) angular velocity and simultaneously sufficiently large deflection, the envisaged solution may determine that the indicated deflection is due to a failed leaf spring and not the unevenness of the road.

Optionally in some examples, including in at least one preferred example, the processing circuitry may be configured to command, in response to detecting the failure of the at least one leaf spring, a brake system of the vehicle to lower a vehicle speed. A technical benefit may include that by lowering the vehicle speed when a failed leaf spring is detected, the damage to other leaf springs (in case of e.g. panic braking) may be prevented or at least reduced. The brake system may for example be an auxiliary brake system, e.g. a brake system provided in addition to a service brake system normally used to reduce vehicle speed. In other examples, the brake system may be the service brake system, a retardation system (including e.g. magnet brakes, exhaust-powered brakes, a generator driven by at least one wheel axle, etc.), or similar, or combinations of two or more such alternatives. In yet other examples, instead or in addition, the processing circuitry may be configured to reduce the vehicle speed by sending a suitable control signal to a propulsion system of the vehicle, e.g. by commanding a lower engine speed or similar.

Optionally, in some examples, including in at least one preferred example, the processing circuitry may be further configured to command the brake system of the vehicle to lower the vehicle speed only if a current vehicle speed is above a vehicle speed threshold. A technical benefit may include that the processing circuitry may thus intervene only if the speed is sufficiently high to risk the failure of further leaf springs, wherein the required speed to take action can be defined by the vehicle speed threshold. The driver may thus still be able to drive the vehicle e.g. back to a workshop but at a reduced speed, with a reduced risk of further leaf spring failure(s).

Optionally, in some examples, including in at least one preferred example, the processing circuitry may be configured to cause, in response to detecting the failure of the at least one leaf spring, at least one indication to be issued to the driver (and/or passenger) of the vehicle. The indication may for example be visual, audio-based, haptic, etc., or a combination of such examples. A technical benefit may include that the driver (and/or passenger) is thus alerted about the failed spring, and that the driver may then manually take the necessary actions required to reduce the potential risks of further leaf spring failure(s), such as decreasing vehicle speed, performing a pull-to-curb maneuver, choosing an alternate route, aborting a current mission to drive the vehicle to a repair/workshop, or similar.

Optionally, in some examples, including in at least one preferred example, the at least one indication may be an audio-based indication. A technical benefit may include that the driver may thus notice the failure simply by listening, without diverting the driver's visual attention somewhere else. An audio-based indication may e.g. be a summer tone, a melody or some other audio signal, and may be provided using one or more summers, speakers or similar, e.g. as part of a music system of the vehicle, an audio warning system already present in the vehicle, and/or e.g. by an additional speaker provided for the purpose of the envisaged solution, or similar.

Optionally, in some examples, including in at least one preferred example, the at least one indication may be a visual indication. A technical benefit may include that the driver may thus notice the failure even in e.g. a noisy environment. A visual indication may e.g. be presented on a display in the driver's cabin, by flashing of one or more lights, or similar.

Optionally, in some examples, including in at least one preferred example, the at least one indication may be a haptic feedback to the driver (and/or passenger) of the vehicle. A technical benefit may include that e.g. the driver can be made aware of the failure without having to divert its visual attention, and also in noisy environments where an audio signal may not be distinguishable from background noise. A haptic signal may for example be provided by one or more motors configured to cause vibrations, in e.g. a steering wheel, a seat, a seat belt, in the floor, in an armrest, in one or more pedals, or similar.

Optionally, in some examples, including in at least one preferred example, the processing circuitry may be configured to transfer, in response to detecting the failure of the at least one leaf spring, at least one indication of the failed leaf spring (or failure) to a remote location, such as e.g. by uploading data to a cloud-based service, sending one or more signals to a remote control/mission planning center, or similar. A technical benefit may include that the failed leaf spring may thus be reported to e.g. one or more individuals responsible for servicing/repairing such springs, such that they may start ordering parts, preparing the tools required for such repairs, provide road-side assistance service, deploying a tow-truck to the vehicle, or similar. As part of the indication, the processing circuitry may in some examples also provide e.g. a current location of the vehicle (based on information obtained from e.g. a global positioning system, or similar.

According to a second aspect of the disclosure, there is provided a heavy-duty vehicle, such as e.g. a truck or any other wheeled road- and/or off-road vehicle. The vehicle includes the computer system of the first aspect (or any example thereof). The vehicle further includes one or more angular velocity sensors configured to provide the angular velocity data, and one or more deflection sensors configured to provide the deflection data. The vehicle further includes the leaf spring-suspended bogie, and the computer system is thus configured to detect failure of at least one leaf spring used to suspend the bogie as described herein. The second aspect may seek to solve the problem of how to provide a vehicle with automated detection-capabilities regarding failed leaf springs. A technical benefit may include those already discussed, e.g. to avoid causing further damage to the vehicle and/or its environment by the driver not being able to manually notice such a failure (in time).

Optionally, in some examples, including in at least one preferred example, the one or more angular velocity sensors may include one or more inertial measurement units (IMUs), gyroscopes, inclination sensors and/or tilt sensors. A technical benefit may include that such sensors are suitable to detect the angular velocities (i.e. at least roll and pitch) of the bogie, either by directly measuring angular velocity or by measured other quantities (over time) from which the velocity may be derived (such as by measuring angles or angular acceleration, or similar). The one or more sensors may be configured and placed at suitable locations of the vehicle, e.g. at various locations on the bogie as will be exemplified in more detail later herein.

Optionally, in some examples, including in at least one preferred example, the one or more deflection sensors may include one or more limit sensors, displacement sensors, and/or distance measuring sensors. A technical benefit may include that such sensors can detect the deflection of the leaf spring(s), and in that they may be placed at one or more suitable locations of the vehicle, such as at one or more suitable locations of the bogie.

Optionally, in some examples, including in at least one preferred example, the bogie may include at least front and rear axle arrangements jointly suspended around a trunnion axle by a left leaf spring and a right leaf spring. The one or more angular velocity sensors may include at least a first angular velocity sensor located on the front axle arrangement, at least a second angular velocity sensor located on the rear axle arrangement, and at least third and fourth angular velocity sensors located proximate to the trunnion axle. The one or more deflection sensors may include left and right front deflection sensors located proximate to where the front axle arrangement connects to the left and right leaf spring, respectively. The one or more deflection sensors may further include left and right rear deflection sensors located proximate to where the rear axle arrangement connects to the left and right leaf spring, respectively. A technical benefit may include that such an arrangement of sensors can measure e.g. both pitch angular velocity, roll angular velocity (i.e. an angular velocity with respect to a roll axis), and individual deflection at both the back and front ends of the respective left and right leaf springs, and similar. The trunnion axle may define a pitch angle of the bogie.

Optionally, in some examples, including in at least one preferred example, the left and right front and rear deflection sensors may be provided on or as part of rubber springs connecting the left and right leaf springs to the front and rear axle arrangements, respectively. If other types of springs/dampers/shock-absorbers (and similar) are used to connect the leaf springs to the axle arrangements, it is of course envisaged that the deflection sensors may instead be provided on or as part of such entities. A technical benefit may include that the compression/release of the springs (such as the rubber springs) may thus be measured and used as an indication of leaf spring deflection. In particular, a failure (or at least partial damage) of a leaf spring may affect the compression/release of the springs (such as the rubber springs), which can thus be measured using the deflection sensors.

According to a third aspect of the disclosure, there is provided a computer-implemented method for detection of leaf spring failure in a leaf spring-suspended bogie of a heavy-duty vehicle (such as in the vehicle of the second aspect). The method includes receiving, by processing circuitry of a computer system (such as the processing circuitry of the computer system of the first aspect or any example thereof), angular velocity data indicative of roll and pitch angular velocities of a leaf spring-suspended bogie of a heavy-duty vehicle (such as the vehicle of the second aspect); receiving, by the processing circuitry, deflection data indicative of deflection of leaf springs of the bogie, and detecting, by the processing circuitry, a failure of at least one leaf spring used to suspend the bogie based on the received angular velocity data and deflection data. The method may thus include the various operations performed by the processing circuitry of the computer system of the first aspect (or any example thereof). The third aspect may seek to solve the problem of how to provide a method of automatically detecting failure of leaf springs in a vehicle, and may provide the same technical benefits as already described herein.

According to a fourth aspect of the disclosure, there is provided a computer program product including program code for performing, when executed by the processing circuitry, the method of the third aspect.

According to a fifth aspect of the disclosure, there is provided a computer-readable storage medium including instructions, which when executed by the processing circuitry, cause the processing circuitry to perform the method of the third aspect. The fourth and fifth aspects may seek to solve the problem of how to provide software (and a means of storing such software) for automated detection of leaf spring failure, with the same technical benefits as already described herein. In some examples, the computer-readable storage medium may be non-transitory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

FIG. 1 schematically illustrates a rear end of an example heavy-duty vehicle, including a bogie suspended using leaf springs, according one or more examples.
FIG. 2 schematically illustrates the bogie of FIG. 1 in more detail.
FIG. 3 schematically illustrates an example configuration of a leaf spring-suspended bogie according to one or more examples, including angular velocity sensors and deflection sensors for automated detection of leaf spring failure.

**FIG. 4** schematically illustrates an example computer system for automated leaf spring failure detection, according to one or more examples.

**FIG. 5** schematically illustrates a flowchart of one or more example methods for automated leaf spring failure detection, according to one or more examples.

**FIG. 6** schematically illustrates an example heavy-duty vehicle, according to one or more examples.

**FIG. 7** is a schematic diagram of an example computer system for implementing examples disclosed herein, according to one or more examples.

## DETAILED DESCRIPTION

The detailed description set forth below provides information and examples of the disclosed technology with sufficient detail to enable those skilled in the art to practice the disclosure.

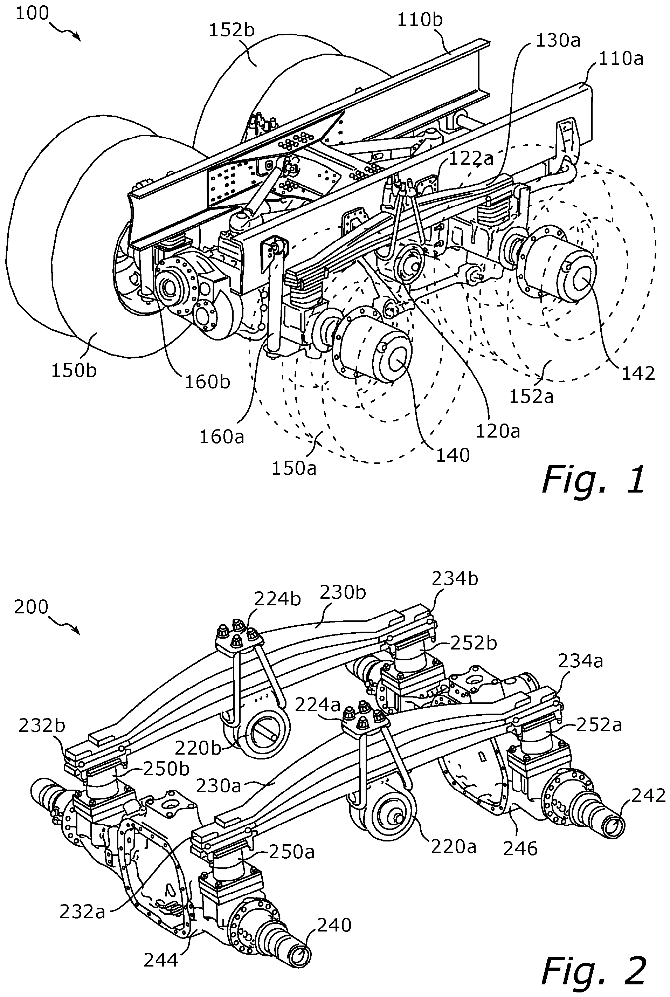

A conventional leaf spring-suspended bogie of a heavy-duty vehicle will now be described in more detail with reference to FIGS. 1 and 2.

**FIG. 1** schematically illustrates an example rear-end 100 of a heavy-duty vehicle, such as a truck. The vehicle includes a chassis, including left and right chassis beams 110a and 110b, respectively. Front and rear bogie axles 140 and 142, respectively, are not connected directly to the beams 110a and 110b, but instead suspended using at least a left set of leaf springs 130a and a right set of leaf springs 130b. The front axle 140 is connected to front ends of the leaf springs 130a and 130b, and the rear axle 142 is connected to rear ends of the leaf springs 130a and 130b. The leaf springs 130a and 130b are in turn connected to the beams 110a and 110b such that they can pivot around a trunnion axle, by mounting of a left trunnion bushing 120a to a left mounting bracket 122a (and similarly by mounting of a right trunnion bushing to a right mounting bracket, both of which are hidden in FIG. 1 by the right beam 110b), wherein the mounting brackets 122a attaches to the beams 110a and 110b and provides the pivot points. As a result, the wheel axles 140 and 142 are suspended by the leaf springs 130a and 130b and allowed to move up and down, as well as to jointly pivot around the trunnion axle through the bushings 120a. In fact, each end of the wheel axles 140 and 142 is thus free to move individually, at least to some extent. The wheel axles 140 and 142 are of course mounted rotatably to the leaf springs 130a, 130b, e.g. via enclosures in which the wheel axles 140 and 142 may turn around their longitudinal axis. Pairs of front wheels 150a and 150b are mounted to the front axle 140, and pairs of rear wheels 152a and 152b are mounted to the rear axle 142 (wherein to improve the visibility of the suspended bogie, the left wheel pairs 150a and 152b are made transparent in FIG. 1). Other components may of course also be provided as part of the suspended bogie, including e.g. left and right dampers 160a and 160b, respectively, and e.g. one or more torsion bars, stabilizer bars, and similar.

**FIG. 2** schematically illustrates an example leaf spring-suspended bogie 200 in more detail. The bogie 200 includes left and right sets of leaf springs 230a and 230b, in this example each including a total of four leaf spring sheets/leaves. In other examples, the number of leaf spring sheets/leaves in the sets may of course be different. As generally used herein, a "set of leaf springs" may include e.g. a single sheet/leaf, a pack of sheets/leaves arranged to form a leaf spring pack, or even two or more leaf spring packs. Each set of leaf springs 230a and 230b are held together via respective combinations 224a and 224b of bars, plates and screws/bolts, wherein the respective combination 224a and 224b serves to mount each set 230a and 230b to a respective trunnion bushing 220a and 220b. The trunnion bushings 220a and 220b are rotatably attachable to the chassis beams, such that the leaf spring sets 230a and 230b may thus rotate around the trunnion axis.

Front and rear wheel axles 240 and 242 are respectively rotatably arranged within front and rear wheel axle enclosures 244 and 246. The enclosures 244 and 246 may include e.g. bushings, bearings, lubrication and all other parts required to mount the wheel axles 240 and 242. If one or both of the wheel axles 240 and 242 are driven, the enclosures 244 and 246 may correspondingly include e.g. gears, clutches, differential couplings, etc., required to transfer e.g. torque provided by one or more torque shafts to the wheel axles 240 and 242, such that the provided torque may ultimately be converted to torque being applied on one or more sets of wheels in turn mounted to the wheel axles 240 and 242. For the purpose of the present disclosure, whether each, some or none of the wheel axles provided on a bogie are driven or not is not important, as there may be a need to detect failure of one or more of the leaf springs 230a and 230b independent on the exact purpose of the wheel axles 240 and 242, and similar.

In the bogie 200, the enclosures 244 and 246 may be mounted to the leaf springs via one or more spring and/or damping elements. For example, the front enclosure 244 may be mounted to a front end 232a of the left leaf springs 230a via a front-left rubber spring 250a, and to a front end 232b of the right leaf springs 230b via a front-right rubber spring 250b. Likewise, the rear enclosure 246 may be mounted to a rear end 234a of the left leaf springs 230a via a rear-left rubber spring 252a, and to a rear end 234b of the right leaf springs 230b via a rear-right rubber spring 252b.

In the boogie 200, the front wheel axle 240 and front enclosure 244 may jointly be referred to as a "front wheel axle arrangement", and the rear wheel axle 242 and rear enclosure 246 may jointly be referred to as a "rear wheel axle arrangement", or similar.

As already mentioned herein, an outstanding problem for such leaf spring-suspensions is that the leaf springs 230a and 230b are prone to failure, e.g. as a result of vehicle overload, the vehicle hitting e.g. a stone or other obstacle, long- and/or short-term fatigue and/or wear of the spring material, or similarly. If one or more leaf springs fail (e.g. break), controlling the vehicle may be difficult and the driver and/or any passenger of the vehicle, as well as bystanders, may be at an increased risk of injury. In particular for vehicles driven in e.g. dark, dusty and/or noisy environments, the driver may have a hard time noticing a failed leaf spring, in particular if the vehicle is already being driven on an uneven road when the failure occurs. Continuing to drive with a failed leaf spring may in turn add stress to the other leaf springs of the bogie, and cause an accelerated wear and/or fatigue also on these springs, leading to premature failure of also these one or more other leaf springs. In worst case scenarios, failure of multiple leaf springs may cause the bogie being disconnected from the chassis of the vehicle, with substantial risk of both bodily and material damages. In addition, repair and/or replacement of leaf springs may be both time-consuming and costly, and the resulting downtime may be undesirable as the vehicle may no longer continue to operate until the leaf spring-suspended bogie is repaired, and failure of one or more additional leaf springs is thus to be avoided if possible. Phrased differently, the leaf springs such as 230a and 230b are considered critical for both the safety and overall operation of the vehicle, and there is a need to better detect when/if a leaf spring fails such that correct measures may be taken to avoid or at least reduce further costs and/or dangers.

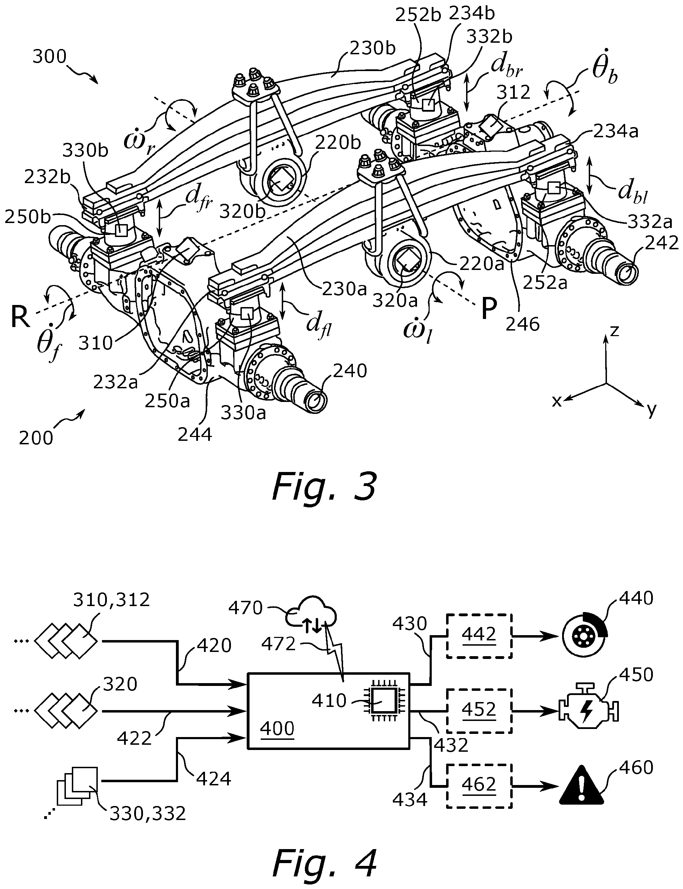

How the present disclosure suggests to solve this problem will now be described in more detail with reference also to FIGS. 3, 4, 5, 6 and 7.

**FIG. 3** schematically illustrates an improved arrangement 300 of the suspended bogie 200, wherein one or more sensors are provided to measure both angular velocity of the bogie and deflection of the leaf springs 230a and 230b. In this particular example, a front angular velocity sensor 310 is provided to measure a front angular velocity $\dot{\theta}_f$ around a roll axis R, wherein the roll axis R may be a longitudinal axis, here illustrated as extending along an x-direction. A rear angular velocity sensor 312 is provided to measure a rear angular velocity $\dot{\theta}_b$ around the roll axis R. The angular velocities $\dot{\theta}_f$ and $\dot{\theta}_b$ may be referred to as front and rear roll angular velocities, or similar. As used herein, a dot above a variable is used to indicate how the variable changes with time, i.e. a time-rate-of-change, which for front and rear roll angles $\theta_f$ and $\dot{\theta}_b$ corresponds to the front and rear roll angular velocities $\dot{\theta}_f$ and $\dot{\theta}_b$, respectively. It is to be noted that because there may be some deformation of the bogie 200, the angular velocities $\dot{\theta}_f$ and $\dot{\theta}_r$ are not necessarily always the same, in which case it may be beneficial to provide both of the front and rear sensors 310 and 312. In other examples, it may be sufficient to provide only a single angular velocity sensor for measuring a single roll angular velocity. In this particular example, the sensor 310 and 312 is mounted on top of the enclosure 244 and 246, respectively. In other examples, the position of the sensors 310 and 312 may be different than those shown in FIG. 3, as long as they are capable of measuring the desired roll angular velocities or e.g. measure other parameters from which such roll angular velocities can be derived. For example, the front sensor 310 may be arranged somewhere on the front wheel axle arrangement (240 and 244), and the rear sensor 312 may be arranged somewhere on the rear wheel axle arrangement (242 and 246), or similar.

The arrangement 300 further includes left and right pitch angular velocity sensors 320a and 320b, respectively, each provided in proximity to a pitch axis P (here extending through the centers of the left and right trunnion bushings 220a and 220b, and which may also be referred to as a trunnion axis or similar). The pitch axis P may for example extend along a y-direction, as illustrated in FIG. 3. The pitch axis P may be a horizontally transverse axis, opposed to a vertically transverse axis (extending e.g. along a z-direction). The left sensor 320a is configured to measure a left pitch angular velocity $\dot{\omega}_l$ around the axis P, and the right sensor 320b is configured to measure a right pitch angular velocity $\dot{\omega}_l$ around the axis P, as indicated in FIG. 3. Also here, due to e.g. deformation and/or flexing of the boogie 200, the pitch angular velocities $\dot{\omega}_l$ and $\dot{\omega}_l$ may not necessarily be the same. In other examples, it may be sufficient to include only one pitch angular velocity sensor configured to measure a single pitch angular velocity around the axis P.

In this example, to measure deflection of the leaf springs, there is further provided a front-left deflection sensor 330a configured to measure a front-left deflection $d_{fl}$, a front-right deflection sensor 330b configured to measure a front-right deflection $d_{fr}$, a rear-left deflection sensor 332a configured to measure a rear-left deflection $d_{bl}$, and a rear-right deflection sensor 332b configured to measure a rear-right deflection $d_{br}$. As used generally herein, subscripts "f" and "b" are used to indicate front and rear/back, respectively, and subscripts "l" and "r" are used to indicate left and right, respectively.

Each sensor 330a, 330b, 332a, 332b may be configured to e.g. measure a change in deflection of the leaf springs relative to a neutral level, as defined by e.g. the vehicle being in an unladen state. For example, for a vehicle with healthy leaf springs and with no or a known load, a reference deflection for each of the sensors 330a, 330b, 332a, 332b may be obtained and used as a reference for further measurements. For example, reference values $d_{fl}^*, d_{fr}^*, d_{bl}^*$ and $d_{rl}^*$ may be obtained, and the deflections $d_{ij}$ may be defined as a deviation from the corresponding reference value $d_{ij}^*$, where $i$ equals $f$ or $b$ and where $j$ equals $l$ or $r$. Other ways of defining deflection may of course also be used, as long as the definition is such that it can be measured whether the leaf springs are deflected more or e.g. less than some reference value. In the configuration shown in FIG. 3, the sensor 330a and 332a measures the deflection at the front end 232a and rear end 234a, respectively, of the left leaf spring 230a, and the sensor 330b and 332b measures the deflection at the front end 232b and rear end 234b, respectively, of the right left spring 230b. As used herein, if not stated to the contrary, "leaf spring" and "set of leaf springs" are used interchangeably.

In general, in the example of FIG. 3, there is thus provided measurements of roll and pitch angular velocities $\dot{\theta}_f$, $\dot{\theta}_b$ and $\dot{\omega}_l$, $\dot{\omega}_r$, and of deflections $d_{fl}$, $d_{fr}$, $d_{bl}$, $d_{br}$. In other examples, only measurements of e.g. a single roll angular velocity $\dot{\theta}$ and/or a single pitch angular velocity $\dot{\omega}$ may be provided. In yet other examples, more sensors than those shown in FIG. 3 may be provided to measure even more pitch and/or roll angular velocities and/or deflections.

In some examples, the deflection sensor such as 330a, 330b, 332a, 332b may be provided on or as part of the rubber spring 250a, 250b, 252a, 252b, respectively. In other examples, the deflection sensors can be provided elsewhere, as long as they are able to measure the desired indications of deflections either directly or by measuring one or more other parameters from which the desired indications of deflections are derivable.

**FIG. 4** schematically illustrates one or more examples of a computer system 400 that includes processing circuitry 410 configured to perform operations in order to automatically detect leaf spring failure based on readings from the angular velocity and deflection sensors.

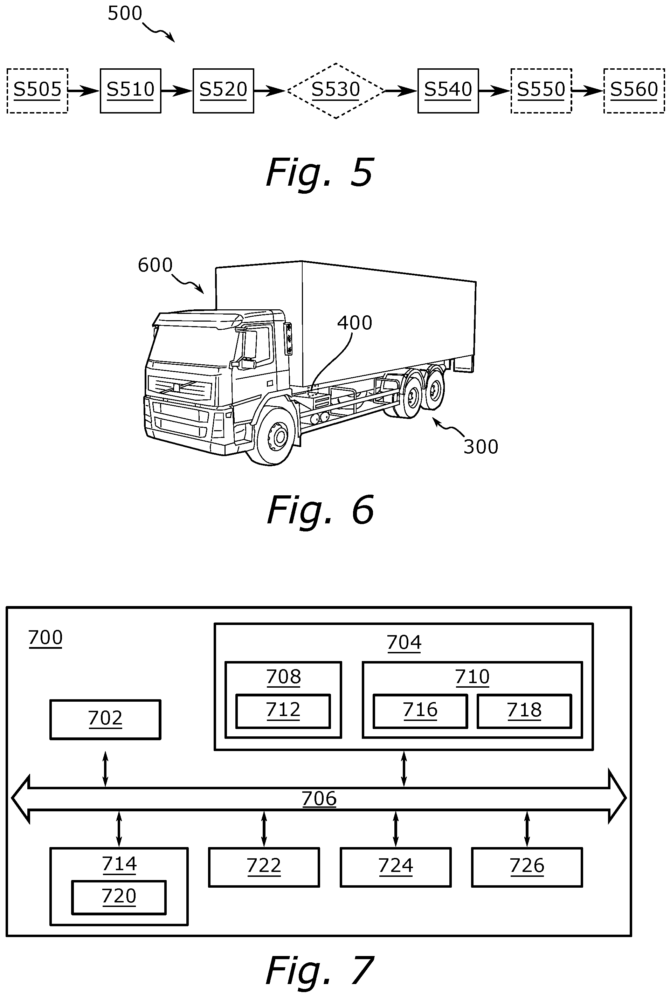

**FIG. 5** schematically illustrates a flowchart of one or more examples of a (computer-implemented) method 500 for automated leaf spring failure detected, such as followed/executed by the computer system 400 and processing circuitry 410.

The processing circuitry 410 is configured to receive, as part of e.g. an operation S510 of the method 500, angular velocity data that is indicative of the roll and pitch angular velocities of the leaf spring-suspended bogie of the heavy-duty vehicle. For example, as part of one or more signals 420, the processing circuitry 410 may receive indications of roll angular velocity (e.g. from the sensors 310, 312), e.g. of $\dot{\theta}_f$ and $\dot{\theta}_b$, or e.g. of $\dot{\theta}$. For example, as part of one or more signals 422, the processing circuitry 410 may receive indications of pitch angular velocity (e.g. from sensors 320, e.g. 320a, 320b), e.g. of $\dot{\omega}_l$ and $\dot{\omega}_r$, or e.g. of $\dot{\omega}$.

The processing circuitry 410 is configured to receive, as part of e.g. an operation S520 of the method 500, deflection data that is indicate of deflection of the leaf springs of the bogie. For example, as part of one or more signals 424, the processing circuitry 410 may receive indications of leaf spring deflection (e.g. from sensors 330, 332, e.g. from 330a, 330b, 332a, 332b), e.g. of $d_{fl}$, $d_{fr}$, $d_{bl}$, $d_{br}$.

Signals 420, 422 and/or 424 may e.g. be transmitted using wires and/or wirelessly, and the processing circuitry 410 and computer system 400 may be configured accordingly for receival of such signals.

The processing circuitry 410 is further configured to detect, as part of e.g. an operation S540 of the method 500, a failure of at least one leaf spring that is used to suspend the bogie, based on the received angular velocity data and deflection data.

In some examples, the processing circuitry 410 may be further configured to detect the failure only if it is determined, as part of e.g. an operation S530 of the method 500, that both the roll and pitch angular velocities are below one or more angular velocity threshold values, and that the deflection of at least one leaf spring is larger than a deflection threshold (where this leaf spring may be the failed leaf spring). For example, operation S530 may include multiple criteria that must each be fulfilled in order to detect that there is a failed leaf spring. Using the example arrangement 300 described with reference to FIG. 3, this may include the following conditions:

$$A1)\ \dot{\theta}_f < TR_f;$$

$$A2)\ \dot{\theta}_b < TR_b;$$

$$B1)\ \dot{\omega}_l < TP_l;$$

$$B2)\ \dot{\omega}_r < TP_r,$$

where $TR_f$ and $TR_b$ are threshold values for the front and rear roll angular velocities, and where $TP_l$ and $TP_r$ are threshold values for the left and right pitch angular velocities, respectively. Other conditions if using fewer angular velocities may include e.g.

$$A)\ \dot{\theta} < TR;$$

$$B)\ \dot{\omega} < TP,$$

where $TR$ and $TP$ are corresponding threshold values for roll and pitch angular velocity, respectively. In the above, it may be that $TR_f = TR_b (= TR)$ or that $TR_f \neq TR_b$, and that $TP_l = TP_r (= TP)$ or that $TP_l \neq TP_r$. For example, conditions A1) and A2) (or A)) being fulfilled may indicate that the front and rear wheel axles 240 and 242 are both stable around the x-axis, i.e. longitudinally stable. Conditions B1) and B2) (or B)) being fulfilled may indicate that the bogie 200 is stable around the trunnion/pitch axis. By first requiring these conditions to be fulfilled, it may thus be confirmed that the bogie 200 is not moving around (much) due to e.g. the vehicle being driven on uneven ground and/or by an undulating road profile, and it may thus be ascertained with more accuracy that indicated deflections that deviates from the reference value(s) are thus likely to be because of a failed leaf spring than due to the vehicle being driven under such road/ground-conditions. It may be checked by the processing circuitry 410 whether any of the following conditions are fulfilled

$$C1)\ d_{fl} > TD_{fl};$$

$$C2)\ d_{fr} > TD_{fr};$$

$$C3)\ d_{bl} > TD_{bl};$$

$$C4)\ d_{br} > TD_{br},$$

and if any (or some particular set) of these conditions are fulfilled, it may be concluded that there is a failure (or at least partial failure) of the corresponding leaf spring (or set of leaf springs). This because a failed leaf spring is likely to affect the stiffness of the leaf spring, that will show up as a deviation in the deflection. For example, if e.g. C1) and/or C2) are fulfilled but not C3) and C4), and may be assumed that there is something wrong with the left leaf spring set 230a, while C3) and/or C4) being fulfilled but not C1) and C2) may indicate an issue with the right ditto 230b. If all conditions C1)-C4) or e.g. C2) and C4) and/or C1) and C3) are fulfilled, this may indicate a failure of leaf spring(s) on both sides of the vehicle, and similar. If not checking for stability of the wheel axle arrangements and/or trunnion/cradle of the bogie, i.e. if not performing operation S530, detecting the leaf spring failure may be performed based on the conditions C1)-C4) only, without first checking whether stability is achieved. This solution may also work to detect leaf spring failure as a failed spring is likely to result in change in deflection, although such a solution may be more sensitive to whether the vehicle is currently driven on uneven ground and/or on a road with an undulating road profile.

In some examples, angular velocity sensors placed on the front and rear wheel axle arrangements may also be used to measure angular velocities around the y-axis of each wheel axle arrangement, and a further check/condition may be included to confirm that these angular velocities are also below some threshold values before considering deviations in leaf spring deflection as an indication of leaf spring failure(s). For example, such additional angular velocities may be measured and provided to the processing circuitry 410 from the sensors 310 and 312, or similar. In this example, as part of e.g. operation S530, it may also be required that e.g. $\dot{\omega}_f < TR_f$ and $\dot{\omega}_b < TR_b$, where $\dot{\omega}_f$ and $\dot{\omega}_b$ is the angular velocity of the front and rear wheel axle arrangements around their respective y-axis, respectively, and where $TR_f$ and $TR_b$ are corresponding threshold values.

In some example, the processing circuitry 410 may be configured to perform an operation S505 of the method 500 in which the various thresholds and reference values for at least the deflections are established.

For example, operation S505 may include recording, with the vehicle in a known state with known leaf spring status and e.g. a known or no load, the current deflections $d_{fl}$, $d_{fr}$, $d_{bl}$, $d_{br}$, and to use these as the respective threshold values $TD_{fl}$, $TD_{fr}$, $TD_{bl}$, $TD_{br}$. This may allow to take into account that the vehicle may be unevenly loaded, and that deflections that are measured may be due to such uneven loading and not necessarily to a leaf spring failure. Phrased differently, operation S505 may include an initial check with the vehicle (and its leaf springs) in a stationary condition, taking into account any differences not caused by leaf spring failure.

In some examples, the processing circuitry 410 may be configured to command, as part of e.g. an operation S550 of the method 500 and in response to detecting that there is a leaf spring failure, a brake system 440 of the vehicle to lower a vehicle speed, in order to avoid further damage to the other leaf springs of the vehicle and/or to other parts of the vehicle and/or its environment. The processing circuitry 410 may for example communicate, via one or more signals 430, directly with the brake system 440 and/or via one or more controllers 442 configured for controlling the brake system 440. The brake system 440 may for example be an auxiliary brake system of the vehicle, or similar. In some examples, commanding the brake system 440 to lower the vehicle speed may be performed only if it is also determined that the current vehicle speed (as obtained from e.g. a speedometer, from a positioning device, or similar) is above a vehicle speed threshold, such as e.g. above 10 km/h, 15 km/h, 20 km/h or similar.

In some examples, the processing circuitry 410 may also, or instead, be configured to command (e.g. as part of the operation S550) a propulsion (e.g. engine, gearbox, or similar) 450 of the vehicle to reduce the vehicle speed in response to detecting the leaf spring failure. The processing circuitry 410 may for example communicated (via one or more signals 432) directly with the propulsion 450 and/or via one or more controllers 452 configured to control the propulsion 450. This may include for example sending a command to reduce an engine speed, to increase an engine braking, to increase a generative braking (in case the engine is an electrical machine), or similar measures resulting in a reduced vehicle speed. Also here, such commanding may in some examples be performed only after first determining that the current vehicle speed is above the vehicle speed threshold.

In some examples, the processing circuitry 410 may be configured to cause, as part of e.g. an operation S560 of the method 500 and in response to detecting the leaf spring failure, an indication 460 to be issued to a driver (and/or passenger) of the vehicle. This may include triggering of an audio-based, visual and/or haptic cue, such as by displaying a message on a display in a driver's cabin of the vehicle, by flashing a light, by sounding an alarm and/or by playing some other suitable audio signal, by causing vibration (using e.g. one or more motors or actuators) in e.g. a steering wheel, a seat, a seatbelt, a floor, a stick shift, an armrest, or any other point of contact with the driver and/or passenger, or similar. The processing circuitry 410 communicate (via one or more signals 434) directly with any entity capable of issuing such an indication/alert/warning 460, or via one or more controllers 462 configured for this purpose.

In some examples, the processing circuitry 410 may be configured to communicate with one or more remote locations, such as with a cloud-based service 470 via one or more wireless communication channels/links 472. Instead of, or in addition to, triggering an indication to the driver and/or passenger(s) of the vehicle, the processing circuitry 410 may provide an indication that there is at least one failed leaf spring to the remote location, such that proper action(s) may be taken at this location. For example, the indication may provide a heads-up to a mission planning operator that the vehicle is not going to complete its missing due to the failed leaf spring, a heads-up to a workshop/service center that ordering of new parts and scheduling of service/repair is necessary, a heads-up to a tow truck dispatcher and/or road-side assistance service provider that the vehicle needs to be either towed back to a workshop or serviced/repaired on the road, or similar. Such indications may also be provided to one or more statistics services collecting information from vehicles regarding how, when and where they fail, and similar. An indication provided to a remote location as envisaged herein may in some examples include information about exactly which leaf spring that has failed, or at least about what set of leaf springs in which there is likely a failed leaf spring; a position of where the failure occurred or at least was detected, and/or e.g. other parameters such as the operating conditions of the vehicle (in terms of driving speed, road inclination, outside temperature, humidity, current loading of the vehicle, etc.) that may be of importance to e.g. such statistics services or similar.

As envisaged herein, in some examples, any combination of actions regarding the brake system 440, propulsion 450 and indication 460 may of course be combined and performed simultaneously or at least subsequently, or similar.

As envisaged herein, the proposed method may be started when e.g. the driver switches the ignition switch of the vehicle to an on-state, and/or by the driver (or a remote controller) activating the method using other means. The method may include to continuously (or at least repeatedly) monitoring the output from the various sensors, and to detect the leaf spring failure once the output from the sensors fulfill the set of conditions described herein.

As envisaged herein, the angular velocity sensors may for example be IMUs, gyroscopes, inclination sensors, tilt sensors, or similar, e.g. any type of sensor from the output of which angular velocity around a particular axis is either directly or indirectly determinable. If a sensor does not output angular velocity but instead angular position, velocity may be derived based on differences between subsequently recorded angular positions, and similar. If a sensor instead outputs angular acceleration, velocity may instead be derived by integrating/summation over acceleration values, or similar, as is known to the skilled person already.

FIG. 6 schematically illustrates an example of a heavy-duty vehicle as envisaged herein, here in the form of a box cargo truck 600. The truck 600 includes the computer system 400 (and processing circuitry 410), and has the improved boogie arrangement 300 including the one or more angular velocity sensors and one or more displacement sensors as described herein. Although illustrated as a truck 600, the present disclosure and the solution presented herein are applicable also to other types of road- and/or offroad-vehicles having leaf spring-suspended bogies, excluding e.g. trains and similar vehicles driven on tracks.

FIG. 7 is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hardcoded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In summary of the above, the present disclosure thus provides a solution for leaf spring failure detection, wherein whether there is a failed leaf spring is determined based on angular velocity data and leaf spring deflection data. In a particular example, deflection data that indicates a failed leaf spring is only considered as indicative of such a failure if the angular velocity data also indicates that the bogie is currently not moving/oscillating due to the vehicle being driven on uneven ground and/or on undulating roads, which may help to make the detection more robust and less error-prone. In some examples, in response to detecting the leaf spring failure, various measures may be taken either alone or in combination, such as attempting to limit and/or reduce a vehicle speed, issuing an indication/alert/warning to a driver, passenger and/or to a remote location, and similar. Notifying the driver about the failed leaf spring allows the driver to initiate a changing/replacing of e.g. a full leaf spring assembly or individual leaf spring as soon as possible, to prevent further damage to e.g. other leaf springs of the bogie or vehicle. By being able to change only a single failed leaf spring in time, service costs and time may be reduced significantly. Indicating the failed leaf spring to the driver may also allow the driver to take appropriate measures, such as reducing the speed of the vehicle before control over the vehicle is lost, and similar. In addition, the proposed solution may reduce the time of the driver spent on checking for broken leaf springs, and the driver may focus its time on other tasks.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged by the present disclosure:

> Example 1: A computer system including processing circuitry configured to: - receive angular velocity data indicative of roll and pitch angular velocities of a leaf spring-suspended bogie of a heavy-duty vehicle; - receive deflection data indicative of deflection of leaf springs of the bogie, and - detect a failure of at least one leaf spring used to suspend the bogie based on the received angular velocity data and deflection data.
>
> Example 2: The computer system of example 1, wherein the processing circuitry is configured to detect the failure of the at least one leaf spring by determining that both the roll and pitch angular velocities are below one or more angular velocity threshold values, and by determining that the deflection of at least one leaf spring is larger than a deflection threshold.
>
> Example 3: The computer system of example 1 or 2, wherein the processing circuitry is further configured to command, in response to detecting the failure of the at least one leaf spring, a brake system of the vehicle to lower a vehicle speed.
>
> Example 4: The computer system of example 3, wherein the processing circuitry is configured to command the brake system of the vehicle to lower the vehicle speed only if a current vehicle speed is above a vehicle speed threshold.

Example 5: The computer system of any one of examples 1 to 4, wherein the processing circuitry is further configured to cause, in response to detecting the failure of the at least one leaf spring, at least one indication to be issued to a driver of the vehicle.

Example 6: The computer system of example 5, wherein the at least one indication is at least one of an audio-based indication, a visual indication and a haptic feedback indication.

Example 7: The computer system of any one of the preceding examples, wherein the processing circuitry is further configured to, in response to detecting the failure of the at least one leaf spring, cause a transmission of an indication of the failed at least one leaf spring to a remote location.

Example 8: A heavy-duty vehicle, including: - the computer system of any one of examples 1 to 7; - one or more angular velocity sensors configured to provide the angular velocity data; - one or more deflection sensors configured to provide the deflection data, and - the leaf spring-suspended bogie.

Example 9: The vehicle of example 8, wherein the one or more angular velocity sensors include one or more inertial measurement units, IMUs, gyroscopes, inclination sensors and/or tilt sensors.

Example 10: The vehicle of example 8 or 9, wherein the one or more deflection sensors include one or more limit sensors, displacement sensors, and/or distance measuring sensors.

Example 11: The vehicle of any one of examples 8 to 10, wherein the bogie includes front and rear axle arrangements jointly suspended around a trunnion axle by a left leaf spring and

a right leaf spring, wherein the one or more angular velocity sensors include at least a first angular velocity sensor located on the front axle arrangement, at least a second angular velocity sensor located on the rear axle arrangement, and at least third and fourth angular velocity sensors located proximate to the trunnion axle, and wherein the one or more deflection sensors include left and right front deflection sensors located proximate to where the front axle arrangement connects to the left and right leaf spring, respectively, and left and

right rear deflection sensors located proximate to where the rear axle arrangement connects to the left and right leaf spring, respectively.

Example 12: The vehicle of example 11, wherein the left and right front and rear deflection sensors are provided on or as part of rubber springs connecting the left and right leaf springs to the front and rear axle arrangements, respectively.

Example 13: A computer-implemented method for detection of leaf spring failure in a leaf spring-suspended bogie of a heavy-duty vehicle, including: - receiving, by processing circuitry of a computer system, angular velocity data indicative of roll and pitch angular velocities of a leaf spring-suspended bogie of a heavy-duty vehicle; - receiving, by the processing circuitry, deflection data indicative of deflection of leaf springs of the bogie, and - detecting, by the processing circuitry, a failure of at least one leaf spring used to suspend the bogie based on the received angular velocity data and deflection data.

Example 14: A computer program product including program code for performing, when executed by the processing circuitry, the method of example 13.

Example 15: A non-transitory computer-readable storage medium including instructions,

which when executed by the processing circuitry, cause the processing circuitry to perform the method of example 13.

**Claims**

1. A computer system (400, 700) comprising processing circuitry (410, 702) configured to:

   - receive angular velocity data indicative of roll and pitch angular velocities ($\dot{\theta}$, $\dot{\omega}$) of a leaf spring-suspended bogie (200, 300) of a heavy-duty vehicle (600);
   - receive deflection data indicative of deflection (d) of leaf springs (230a, 230b) of the bogie, and
   - detect a failure of at least one leaf spring used to suspend the bogie based on the received angular velocity data and deflection data.

2. The computer system of claim 1, wherein the processing circuitry is configured to detect the failure of the at least one leaf spring by determining that both the roll and pitch angular velocities are below one or more angular velocity threshold values ($TR$, $TP$), and by determining that the deflection of at least one leaf spring is larger than a deflection threshold ($TD$).

3. The computer system of claim 1 or 2, wherein the processing circuitry is further configured to command, in response to detecting the failure of the at least one leaf spring, a brake system (440) of the vehicle to lower the vehicle's speed.

4. The computer system of claim 3, wherein the processing circuitry is configured to command the brake system of the vehicle to lower the vehicle speed only if a current vehicle speed is above a vehicle speed threshold.

5. The computer system of any one of claims 1 to 4, wherein the processing circuitry is further configured to cause, in response to detecting the failure of the at least one leaf spring, at least one indication (460) to be issued to a driver of the vehicle.

6. The computer system of claim 5, wherein the at least one indication is at least one of an audio-based indication, a visual indication and a haptic feedback indication.

7. The computer system of any one of the preceding claims, wherein the processing circuitry is further configured to, in response to detecting the failure of the at least one leaf spring, cause a transmission of an indication of the failed at least one leaf spring to a remote location (470).

8. A heavy-duty vehicle (600), comprising:

- the computer system (400, 700) of any one of claims 1 to 7;
- one or more angular velocity sensors (310, 312, 320, 322) configured to provide the angular velocity data;
- one or more deflection sensors (330, 332) configured to provide the deflection data, and
- the leaf spring-suspended bogie (200, 300).

9. The vehicle of claim 8, wherein the one or more angular velocity sensors comprise one or more inertial measurement units, IMUs, gyroscopes, inclination sensors and/or tilt sensors.

10. The vehicle of claim 8 or 9, wherein the one or more deflection sensors comprise one or more limit sensors, displacement sensors, and/or distance measuring sensors.

11. The vehicle of any one of claims 8 to 10, wherein the bogie comprises front and rear axle arrangements (240, 244; 242, 246) jointly suspended around a trunnion axle (P) by a left leaf spring (230a) and a right leaf spring (230b), wherein the one or more angular velocity sensors comprise at least a first angular velocity sensor (310) located on the front axle arrangement, at least a second angular velocity sensor (312) located on the rear axle arrangement, and at least third and fourth angular velocity sensors (320a, 320b) located proximate to the trunnion axle, and wherein the one or more deflection sensors comprise left and right front deflection sensors (330a, 330b) located proximate to where the front axle arrangement connects to the left and right leaf spring, respectively, and left and right rear deflection sensors (332a, 332b) located proximate to where the rear axle arrangement connects to the left and right leaf spring, respectively.

12. The vehicle of claim 11, wherein the left and right front and rear deflection sensors are provided on or as part of rubber springs (250) connecting the left and right leaf springs to the front and rear axle arrangements, respectively.

13. A computer-implemented method (500) for detection of leaf spring failure in a leaf spring-suspended bogie (200, 300) of a heavy-duty vehicle (600), comprising:

- receiving (S410), by processing circuitry (410, 702) of a computer system (400, 700), angular velocity data indicative of roll and pitch angular velocities ($\dot{\theta}$, $\dot{\omega}$) of a leaf spring-suspended bogie of a heavy-duty vehicle;
- receiving (S420), by the processing circuitry, deflection data indicative of deflection of leaf springs of the bogie, and
- detecting (S440), by the processing circuitry, a failure of at least one leaf spring used to suspend the bogie based on the received angular velocity data and deflection data.

14. A computer program product (714) comprising program code (720) for performing, when executed by the processing circuitry, the method of claim 13.

15. A non-transitory computer-readable storage medium (714) comprising instructions (720), which when executed by the processing circuitry, cause the processing circuitry to perform the method of claim 13.

Fig. 1

Fig. 2

Fig. 3

Fig. 4

500

S505 → S510 → S520 → S530 → S540 → S550 → S560

## Fig. 5

600

400

300

## Fig. 6

700

704

708

712

710

716 718

702

706

714

720

722 724 726

## Fig. 7

<table>
<tr><td>Europäisches Patentamt<br/>European Patent Office<br/>Office européen des brevets</td><td>**EUROPEAN SEARCH REPORT**</td><td>**Application Number**<br/><br/>EP 24 20 2369</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/153322 A1 (NALAWADE DINKAR [IN] ET AL) 9 May 2024 (2024-05-09) <br> * paragraphs [0006] - [0017], [0053] - [0078]; figures * <br> ----- | 1-15 | INV. <br> B60G17/0185 <br> B60G11/04 <br> B60G9/02 <br> G01M17/04 <br> B60G17/0195 <br> B60W50/04 |
| A | US 2024/149630 A1 (NALAWADE DINKAR [IN] ET AL) 9 May 2024 (2024-05-09) <br> * claims; figures * <br> ----- | 1-15 | |

**TECHNICAL FIELDS SEARCHED (IPC)**

B60G
G01M
B60W

The present search report has been drawn up for all claims

| Place of search | Date of completion of the search | Examiner |
|---|---|---|
| The Hague | 7 February 2025 | Cavallo, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2369

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | | Publication date |
|---|---|---|---|---|
| US 2024153322 A1 | 09-05-2024 | EP | 4364982 A1 | 08-05-2024 |
| | | US | 2024153322 A1 | 09-05-2024 |
| US 2024149630 A1 | 09-05-2024 | EP | 4364983 A1 | 08-05-2024 |
| | | US | 2024149630 A1 | 09-05-2024 |

EPO FORM P0459

For more details about this annex : see Official Journal of the European Patent Office, No. 12/82